# EUROPEAN PATENT APPLICATION

(11) **EP 4 586 618 A1**
(43) Date of publication of application: **16.07.2025**
(21) Application number: 23862295.5
(22) Date of filing: 01.09.2023
(51) Int. Cl.: H04N 21/422

(54) **MULTIMEDIA COMPONENT TRIGGERING METHOD AND APPARATUS, ELECTRONIC DEVICE AND STORAGE MEDIUM**

(30) Priority: 08.09.2022 CN 202211098313
(71) Applicant: DOUYIN VISION CO., LTD., Beijing 100041 (CN)
(72) Inventor: CHEN, Meng, Beijing 100028 (CN); ZHAO, Dong, Beijing 100028 (CN); LIAO, Yilun, Beijing 100028 (CN)
(74) Representative: Dentons UK and Middle East LLP
(86) International application number: PCT/CN2023/116534
(87) International publication number: WO 2024/051601

(57) **Abstract**

The embodiment of the present disclosure provides a method for triggering a multimedia component, an apparatus, an electronic device and a storage medium. A target video is played in a video playing interface. In response to a trigger gesture for an identification triggering area in the video playing interface, a component identification is displayed. In response to a drag gesture for the component identification, the component identification is moved and hidden information is displayed in the video playing interface after the component identification is moved to a target position.

## Description

### RELATED APPLICATIONS

This application claims priority to Chinese Patent Application No. 202211098313.6 filed on September 08, 2022, and entitled "METHOD, APPARATUS, ELECTRONIC DEVICE AND STORAGE MEDIUM FOR TRIGGERING A MULTIMEDIA COMPONENT", the entire content of which is incorporated herein by reference.

### FIELD

Embodiments of the present disclosure relate to the field of Internet technologies, and in particular, to a method, apparatus, an electronic device, and a storage medium for triggering a multimedia component.

### BACKGROUND

Currently, Internet-based short video applications have attracted more and more users by virtue of free publishing and content richness. Meanwhile, by setting the hidden information based on the multimedia component in the short video, the purpose of further improving the interactivity between the user and the platform is achieved.

### SUMMARY

The embodiment of the present disclosure provides a method, an apparatus, an electronic device and a storage medium for triggering a multimedia component.

According to a first aspect, an embodiment of the present disclosure provides a method for triggering a multimedia component, including:
playing a target video in a video playing interface; in response to a trigger gesture for an identification triggering area in the video playing interface, displaying a component identification; and in response to a drag gesture for the component identification, moving the component identification and displaying hidden information in the video playing interface after the component identification is moved to a target position.

According to a second aspect, an embodiment of the present disclosure provides an apparatus for triggering a multimedia component, including:
a playing module configured to play a target video in a video playing interface;
a triggering module configured to display a component identification in response to a trigger gesture for an identification triggering area in the video playing interface; and
a displaying module configured to in response to a drag gesture for the component identification, move the component identification and display hidden information in the video playing interface after the component identification is moved to a target position.

According to a third aspect, an embodiment of the present disclosure provides an electronic device, including:
a processor, and a memory communicatively connected to the processor,
the memory storing computer executable instructions, and
the processor executing the computer-executable instructions stored in the memory to implement the method for triggering the multimedia component according to the first aspect and various possible designs of the first aspect.

According to a fourth aspect, an embodiment of the present disclosure provides a computer-readable storage medium, where the computer-readable storage medium stores computer-executable instructions, and the computer-executable instructions, when executed by the processor, implement the method for triggering a multimedia component according to the first aspect and the possible designs of the first aspect.

According to a fifth aspect, an embodiment of the present disclosure provides a computer program product, including a computer program, where the computer program, when executed by a processor, implements the method for triggering a multimedia component according to the first aspect and various possible designs of the first aspect.

According to a sixth aspect, an embodiment of the present disclosure provides a computer program, where the computer program, when executed by a processor, implements the method for triggering a multimedia component according to the first aspect and various possible designs of the first aspect.

According to the method for triggering a multimedia component, the apparatus, the electronic device and the storage medium provided by the embodiment of the present disclosure, the target video is played in the video playing interface; in response to a trigger gesture for an identification triggering area in the video playing interface, a component identification is displayed; in response to a drag gesture for the component identification, the component identification is moved and hidden information is displayed in the video playing interface after the component identification is moved to a target position.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative labor.
FIG. 1 is an application scenario diagram of a method for triggering a multimedia component according to an embodiment of the present disclosure;
FIG. 2 is a first schematic flowchart of a method for triggering a multimedia component according to an embodiment of the present disclosure;
FIG. 3 is a schematic diagram of a video playing interface according to an embodiment of the present disclosure;
FIG. 4 is a schematic diagram of a component identification according to an embodiment of the present disclosure;
FIG. 5 is a schematic diagram of a logical structure of a video playing interface according to an embodiment of the present disclosure;
FIG. 6 is a flowchart of a specific implementation of step S102 in the embodiment shown in FIG. 2;
FIG. 7 is a schematic diagram of displaying a component identification through a component container according to an embodiment of the present disclosure;
FIG. 8 is a schematic diagram of a process of displaying hidden information according to an embodiment of the present disclosure;
FIG. 9 is a second schematic flowchart of a method for triggering a multimedia component according to an embodiment of the present disclosure;
FIG. 10 is a schematic diagram of a process of displaying a component identification by a long-press gesture according to an embodiment of the present disclosure;
FIG. 11 is a schematic diagram of a drag gesture trajectory according to an embodiment of the present disclosure;
FIG. 12 is a schematic diagram of a change of an identification attribute according to an embodiment of the present disclosure;
FIG. 13 is a structural block diagram of an apparatus for triggering a multimedia component according to an embodiment of the present disclosure;
FIG. 14 is a schematic structural diagram of an electronic device according to an embodiment of the present disclosure;
FIG. 15 is a schematic diagram of a hardware structure of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts shall fall within the scope of the present disclosure.

The following describes an application scenario of an embodiment of the present disclosure.

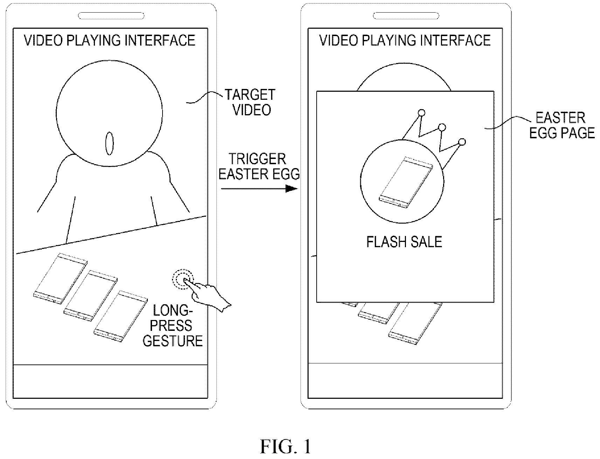

FIG. 1 is an application scenario diagram of a method for triggering a multimedia component according to an embodiment of the present disclosure. As shown in FIG. 1, the method provided in the embodiments of the present disclosure may be applied to a terminal device, for example, a smart phone, a tablet computer, or the like. Exemplarily, the terminal device runs an application program of a short video. In a process of playing, by the terminal device, a target video (short video) through a video playing interface of the application program, some hidden information, that is, "easter eggs", is hidden in the video playing interface, and in response that the user performs a gesture operation on the video playing interface, if the multimedia component corresponding to the easter egg is triggered (the figure shows that the easter egg is triggered in response that the long press gesture is performed), the hidden page corresponding to the hidden information, that is, the "easter egg page", is displayed on top of the video playing interface. More specifically, for example, the purpose of triggering the hidden information in the short video is achieved.

In the related art, in an application scenario of triggering hidden information (easter eggs) in a video, for a terminal device such as a smart phone or a tablet computer, a manner of triggering the hidden information is usually implemented based on a gesture operation such as a tap gesture and a long press gesture. In order to implement the foregoing video triggering scheme, a fixed identification triggering area needs to be set in the video playing interface of the application, and in response that the gesture operation touches the identification triggering area, for example, clicking and long pressing the identification triggering area, corresponding hidden information (easter eggs) is triggered. However, due to the display area and touch area of the video playing interface, only a small number of identification triggering areas may be predetermined in the video playing interface, otherwise, the overlapping of the identification triggering areas may be caused, thereby causing conflict of the easter egg triggering logic. Therefore, triggering methods of hidden information in a video is single and a quantity of hidden information is limited. Embodiments of the present disclosure provide a method for triggering a multimedia component to solve the above problem.

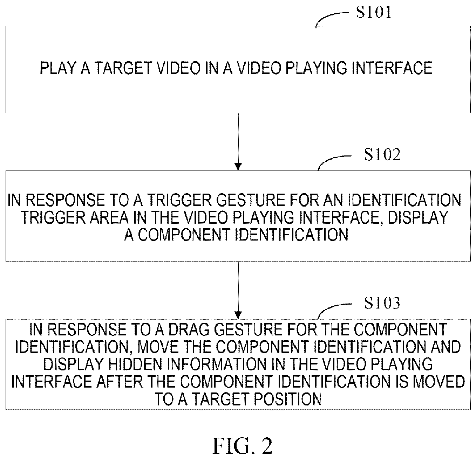

Referring to FIG. 2, FIG. 2 is a first schematic flowchart of a method for triggering a multimedia component according to an embodiment of the present disclosure. The method of this embodiment may be applied to a terminal device, and the method for triggering a multimedia component includes:
Step S101: play a target video in a video playing interface.
Step S102: in response to a trigger gesture for an identification triggering area in the video playing interface, display a component identification.

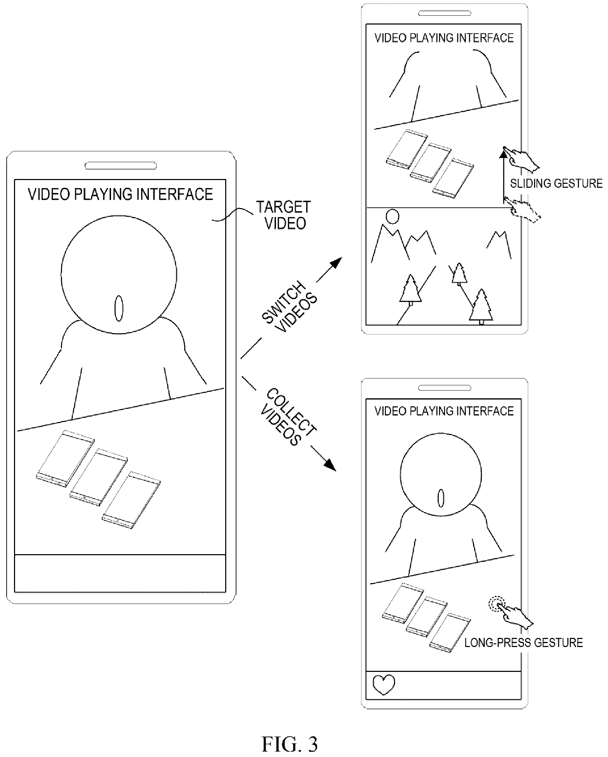

For example, the execution body of the method provided in this embodiment may be a terminal device, for example, a smart phone, a tablet computer, or the like. The terminal device runs an application program for playing a video, and more specifically, for example, a short video application program based on a feed streaming technology, where the application program plays a short video through a video playing interface. FIG. 3 is a schematic diagram of a video playing interface according to an embodiment of the present disclosure.

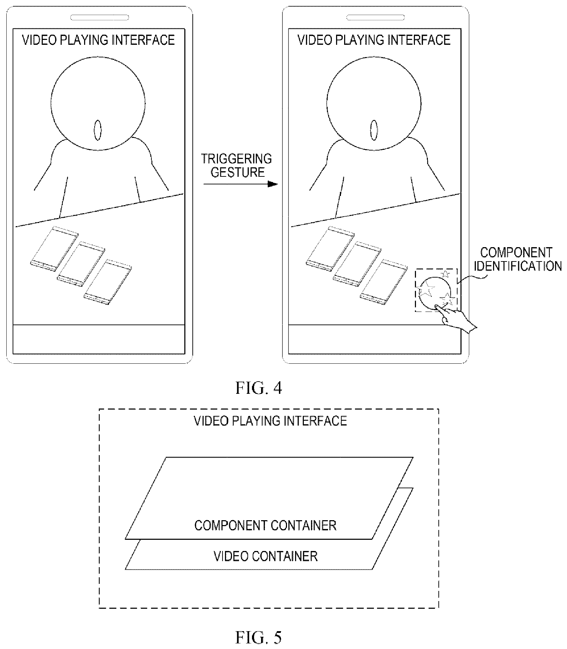

Further, an identification triggering area for triggering the component identification is predetermined in the video playing interface, where the component identification, namely the easter egg identification, may be an icon for triggering the hidden information (triggering the easter egg). The identification triggering area may be invisible, and after the user applies the trigger gesture to the identification triggering area, the terminal device detects the first contact coordinate corresponding to the trigger gesture, and determines whether the first contact coordinate is located in the predetermined identification triggering area, on the one hand, if the first contact coordinate is located in the identification triggering area, the terminal device triggers the corresponding component identification event, and displays the component identification at the corresponding position of the identification triggering area; on the other hand, if the first contact coordinate is located outside the identification triggering area, the corresponding video control event is triggered through a control for controlling the video of the application to execute the corresponding video control function, that is, a native program function of the application program, for example, switching a video, collecting a video, or the like. The component identification may be a graphic, a text, or a symbol having a specific shape. The component identification plays a role of guiding a user operation, and in a subsequent step, hidden information (easter eggs) of the response is triggered by dragging the component identification. FIG. 4 is a schematic diagram of a component identification according to an embodiment of the present disclosure, as shown in FIG. 4, in an initial state, in a video playing interface for playing a target video, a component identification is not visible. After the user performs the trigger gesture on the identification trigger area of the video playing interface, the terminal device responds to the trigger gesture, and in the corresponding position, for example, the identification trigger area, displays component identification. The trigger gesture may be an operation of clicking, double-clicking, and pressing a fixed contact position of the corresponding video playing interface.

In a possible implementation, the video playing interface includes a video container and a component container which are arranged in an overlapping manner, where the video container is used for displaying a target video, and the component container is used for displaying the component identification and the hidden information. FIG. 5 is a schematic diagram of a logical structure of a video playing interface according to an embodiment of the present disclosure. In the default state, the component container is disposed on top of the video container, and when the component container does not display the component identification and the hidden information, the component container is invisible, that is, the user may see the target video played in the video container layer through the component container layer. Further, the video container is further configured to respond to the video control event by setting the video component to implement the video control function; and the component container responds to the component control event by setting the hidden component, so as to realize display control of the component identification and the hidden information. The video container and the component container are both software modules, implemented by corresponding classes, where the video container is implemented based on canvas; and the component container is implemented based on the lynx container.

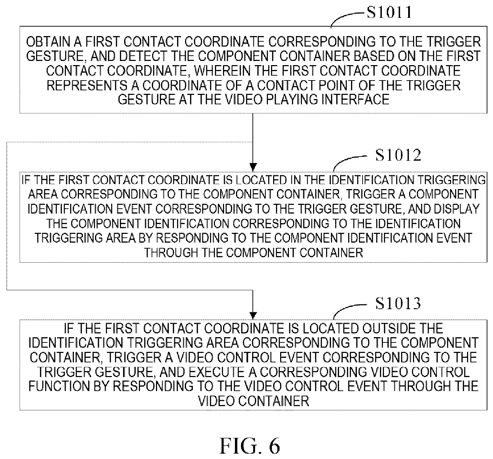

Further, in order to realize full-screen display of the hidden information, the component container and the video container in the video playing interface may be overlapped with each other, and therefore, after the triggering event corresponding to the triggering gesture is generated, if both the video container and the component container respond to the triggering event, the conflict of the processing logic is caused, so in order to solve the above problem, the logic for responding to the triggering gesture needs to be further refined, as shown in FIG. 6, the specific implementation step of step S102 includes:
Step S1011: obtain a first contact coordinate corresponding to the trigger gesture, and detect the component container based on the first contact coordinate, where the first contact coordinate represents a coordinate of a contact point of the trigger gesture at the video playing interface.
Step S1012: if the first contact coordinate is located in the identification triggering area corresponding to the component container, trigger a component identification event corresponding to the trigger gesture, and display the component identification corresponding to the identification triggering area by responding to the component identification event through the component container.
Step S1013: if the first contact coordinate is located outside the identification triggering area corresponding to the component container, trigger a video control event corresponding to the trigger gesture, and execute a corresponding video control function by responding to the video control event through the video container.

Exemplarily, the component container corresponds to at least one identification triggering area. After the terminal device detects the trigger gesture, a corresponding first contact coordinate is obtained according to the contact point of the trigger gesture on the video display interface. Then, based on the first contact coordinate, it is determined whether the first contact coordinate falls within the identification triggering area corresponding to the component container, where the identification triggering area corresponding to the component container may correspond to information predetermined by the configuration file, may be directly obtained, and then compare the coordinate relationship between the identification triggering area and the first contact coordinate to determine whether the first contact coordinate is located in the identification triggering area corresponding to the component container.

On one hand, if the first contact coordinate is located in the identification triggering area corresponding to the component container, the component identification event corresponding to the trigger gesture is triggered, where the trigger gesture may include one or more types, and when the trigger gesture includes multiple types, each trigger gesture corresponds to one component identification event. For example, when the trigger gesture is a click gesture, the event A is triggered, after the component container responds to the event A, the component identification # 1 is displayed, and then the hidden information a is triggered based on the drag gesture for the component identification # 1; when the trigger gesture is a long-press gesture, the event B is triggered, after the component container responds to the event B, the component identification # 2 is displayed, and then the hidden information b is triggered based on the drag gesture for the component identification # 2.

Further, exemplarily, the component container includes a first hidden component, and the step S1012 of displaying the component identification corresponding to the identification triggering area by responding to the component identification event through the component container includes:
setting the component container as a first display level and the video container as a second display level, the first display level being higher than or equal to the second display level; and triggering the first hidden component in the component container to respond to the component identification event, and displaying the component identification in an upper layer or a same layer as the target video.

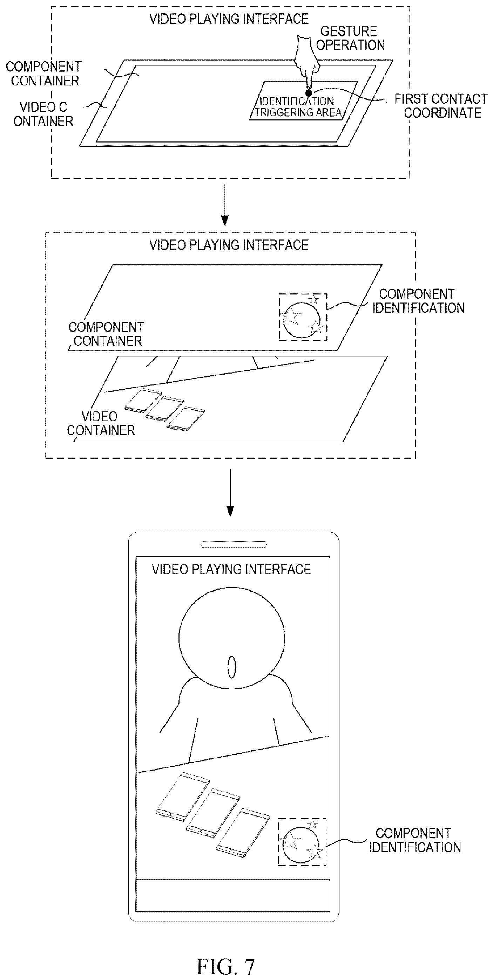

FIG. 7 is a schematic diagram of displaying a component identification by using a component container according to an embodiment of the present disclosure, as shown in FIG. 7, when the component container and the video container are in the same display level (the first display level is equal to the second display level), when the component container is detected based on the first contact coordinate, it is determined that the first contact coordinate is located in the identification triggering area corresponding to the component container, the video container and the component container are set to the same display level, at this time, the terminal device may respond to the component identification event through the first hidden component set in the component container while playing the target video through the video container, and display the component identification in the component container. Visually, component identification and target video are displayed simultaneously in the video playback interface, so that the purpose of displaying the component identification is achieved without affecting the target video display, and the display effect of the target video is avoided.

In another aspect, the video container includes a control for controlling a video, and the control for controlling the video is configured to perform a corresponding video control function in response to the video control event. If the first contact coordinate is located outside the identification trigger area corresponding to the component container, the video control event corresponding to the trigger gesture is similar to the component identification event, the trigger gesture may include one or more, and when the trigger gesture includes multiple types, each trigger gesture corresponds to one video control event, for example, when the trigger gesture is a click gesture, the corresponding video control event is responded to by the video container, and the target video is paused; when the trigger gesture is a long-press gesture, the corresponding video control event is responded to by the video container, and the target video is collected.

Further, for example, the component container is a lynx container, and the video container is a canvas container. A specific implementation method of performing event response by using the video container is: adding *user-interaction-enabled = false* to the bottom full-screen canvas and indicating that no response event is required, and not adding *user-interaction-enabled = false* to the remaining elements in the upper layer of the canvas and normally responding to the event. When a user performs an operation (for example, a click operation) on a screen, the terminal device (the target application running in the terminal device) detects, according to the click coordinate, an element that should respond to the event, and for an overlapped element (here, the bottom video and the upper layer full-screen canvas). The default behavior is that the upper element may respond to the event regardless of whether it is bound to the calling function of the click operation. But because the canvas is set with *user-interaction-enabled=false,* the event target (target) may not always be used as an event target in the detection stage, until a bottom video element (a control for controlling a video) is found, and the video element is executed to implement a video control function.

In this embodiment, after the trigger gesture is detected, the component container is firstly checked, the component container is preferentially used (as a component identification event) to respond to the t corresponding trigger event. After the component container cannot respond to the corresponding trigger event (the first contact coordinate is located outside the identification triggering area corresponding to the component container), the video container is used to respond to the trigger event (in response to the video control event). The logical conflict is avoided when the video container and the component container respond to the trigger gesture, and the operation logic control is realized when the component container and the video container in the video playback interface overlap each other.

Step S103: in response to a drag gesture for the component identification, move the component identification and display hidden information in the video playing interface after the component identification is moved to a target position.

For example, after displaying the component identification, in order to further trigger the hidden information, the hidden information is triggered by dragging the component identification. Specifically, for example, after the user performs the drag gesture on the component identification that is displayed in the video playing interface, the terminal device synchronously updates a display position of component identification on the video playing interface according to the drag gesture trajectory, to implement the display effect of the mobile component identification; and after the component identification moves to the target position, the hidden information is triggered, that is, the hidden information is displayed in the video playing interface. The hidden information, for example, displays a target page in the video playing interface, and more specifically, for example, a promotion page, a product parameter page, or the like. The specific implementation content of the hidden information may be set according to specific requirements, and details are not described herein again.

For example, in response to a drag gesture for a component identification, a specific implementation step of the mobile component identification includes: adding an area view element (corresponding to a hidden information trigger area) of a predetermined size to an upper layer (a component container) of a full-screen view element (video container), adding a *block-native-event* as true. The element area is captured and responded by the component container without being transmitted to the underlying client (the video container). The user clicks on the hidden information triggering area, records the coordinates of the next click, and draws the component identification at the coordinate, the user moves the finger and moves out of the specified area, the mobile event is triggered, the mobile event may be intercepted and transmitted to the underlying client (the video container), so that the next coordinate position of the component identification is calculated, and the component identification characteristic moves along with the finger.

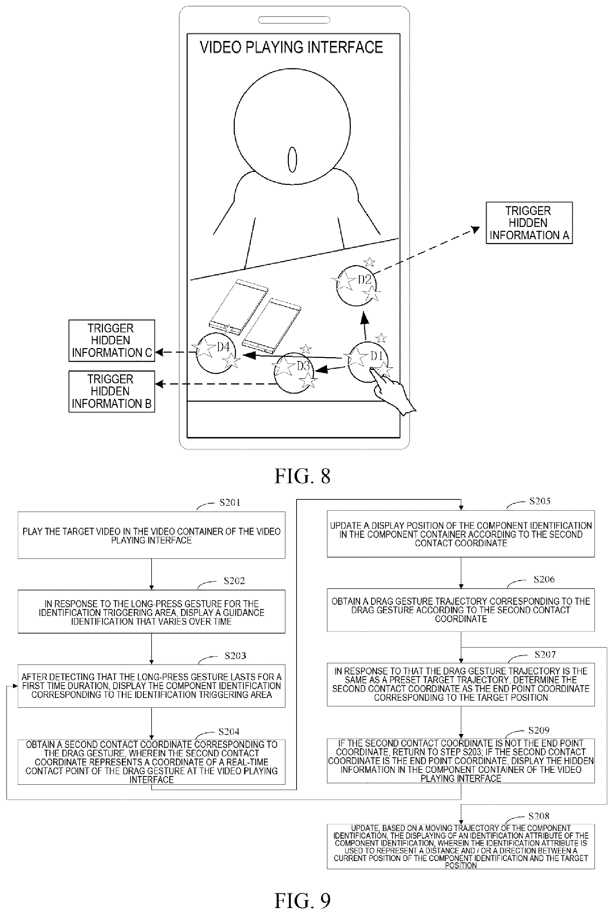

FIG. 8 is a schematic diagram of a process of displaying hidden information according to an embodiment of the present disclosure. The initial position (position D1) of the assembly identification corresponds to the trigger area, the target position (position D2) corresponds to the trigger area of the hidden information, and the target position may be predetermined based on the configuration file. For example, the target position may include a plurality of different hidden information when the video identification is moved from the initial position to a different target position. Referring to FIG. 8, in addition to the position D2, the position D3 and the position D4 are included, and when the assembly identification is moved from D1 to D3, corresponding hidden information B is triggered; and when the component identification is moved from D1 to D4, corresponding hidden information C is triggered. Because the target position can be flexibly set, different hidden information can be correspondingly triggered when the target position is different, so that the triggering flexibility and the triggering mode diversity of the hidden information are improved, and the amount of the hidden information which may be set in the target video is increased.

In this embodiment, the target video is played in the video playing interface; in response to the trigger gesture for the identification trigger area in the video playing interface, the component identification is displayed; in response to the drag gesture for the component identification, the component identification is moved and the hidden information is displayed in the video playing interface after the component identification is moved to a target position. Since the component identification is displayed first, and then the triggering method of moving the hidden information to the target position based on the dragging gesture identified for the component, a more diversified triggering method may be implemented by changing the target position. Compared with the traditional triggering method of triggering the hidden information by clicking, the operation dimension is more, the problem that the triggering method for triggering the hidden information in the video is single is solved, the hidden information based on different triggering methods may be set in the video, and the amount of the hidden information is improved.

Referring to FIG. 9, FIG. 9 is a second schematic flowchart of a method for triggering a multimedia component according to an embodiment of the present disclosure. On the basis of the embodiment shown in FIG. 2, in this embodiment, step S102 is further refined, where the video playing interface includes a video container and a component container that are overlapped, and the method for triggering a multimedia component provided in this embodiment includes:
Step S201: play the target video in the video container of the video playing interface.
Step S202: in response to the long-press gesture for the identification triggering area, display a guidance identification that varies over time.
Step S203: after detecting that the long-press gesture lasts for a first time duration, display the component identification corresponding to the identification triggering area.

For example, in an application scenario of triggering the hidden information, considering that the component identification is invisible before being triggered, the gesture operation of the user may cause an accidental touch problem. For example, when the duration of the "long-press gesture" operation is too short, it may be confused with the "click gesture" operation, so that accidental touch occurs and the interaction experience is affected.

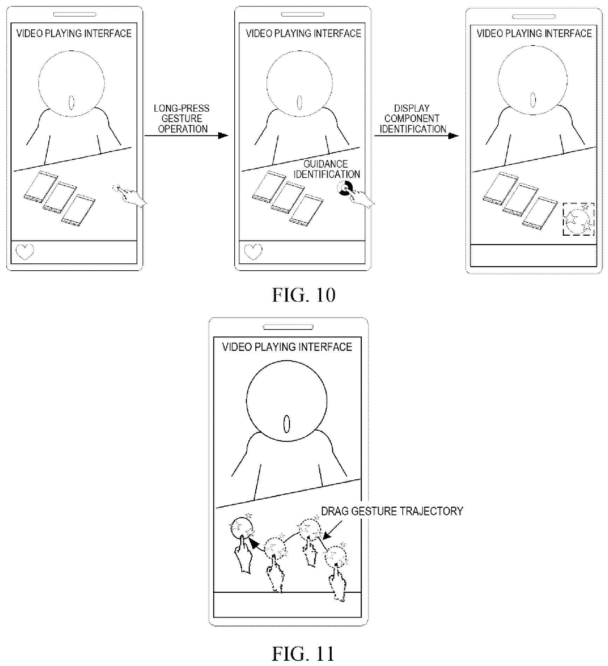

FIG. 10 is a schematic diagram of a process of displaying a component identification by using a long-press gesture according to an embodiment of the present disclosure, as shown in FIG. 10, after a user performs a long-press gesture operation on a video playing interface, the terminal device displays a guide identification on the video playing interface, the guide identification may be an icon that changes over time, as shown in FIG. 10, for example, the guide identification is a circular progress bar, and as the long-press gesture continues, the circular progress bar continues to advance, and after the long-press gesture lasts for the first duration, the progress bar goes to the end, and then displays the component identification corresponding to the identification triggering area.

In this embodiment, by setting the guide identification, the component identification is triggered and displayed after the long-press gesture lasts for the first duration, so that accidental touch is avoided, and interaction efficiency and use experience are improved. It may be understood that, in other embodiments, for example, based on the implementation in the embodiment shown in FIG. 2, the component identification may be directly displayed in response to the long-press gesture without displaying the guide identification. Therefore, steps S202-S203 are optional steps, and in a case where the component identification is displayed using, for example, the method provided in the embodiment shown in FIG. 2, normal execution of subsequent steps is not affected.

Step S204: obtain a second contact coordinate corresponding to the drag gesture, where the second contact coordinate represents a coordinate of a real-time contact point of the drag gesture at the video playing interface.

Step S205: update a display position of the component identification in the component container according to the second contact coordinate.

Exemplarily, further, after the user performs the drag gesture operation on the component identification, the terminal device obtains the corresponding second contact coordinate by detecting the drag gesture, that is, coordinates of the real-time contact point of the drag gesture. Then, based on the second contact coordinate, the component identification is synchronously rendered to the position of the second contact coordinate, to implement synchronous movement of the component identification and the drag gesture.

Step S206: obtain a drag gesture trajectory corresponding to the drag gesture according to the second contact coordinate.

Step S207: in response to that the drag gesture trajectory is the same as a preset target trajectory, determine the second contact coordinate as the end point coordinate corresponding to the target position.

For example, after obtaining the second contact coordinate representing the real-time position of the drag gesture, the drag gesture trajectory may be obtained according to the current second contact coordinate and the corresponding second contact coordinate of the historical position of the previous drag gesture. FIG. 11 is a schematic diagram of a drag gesture trajectory according to an embodiment of the present disclosure, as shown in FIG. 11, as the drag gesture moves continuously, the terminal device obtains a set of ordered second contact coordinates by detecting a contact point of the drag gesture in the video playing interface, where the set of ordered second contact coordinates is a drag gesture trajectory. As the drag gesture continues to move, the corresponding drag gesture trajectory also changes, when it is detected that the drag gesture trajectory coincides with the predetermined target trajectory, the trigger condition is satisfied, at this time, the last second contact coordinate that constitutes the drag gesture trajectory, that is, the latest obtained second contact coordinate, is determined as the end point coordinate. In the following step, if it is detected that the second contact coordinate is the end point coordinate, the hidden information trigger is performed, thereby implementing trigger mode of the easter egg based on the drag gesture trajectory. Exemplarily, the target trajectory may include one or more. When there is a plurality of target trajectories, each target trajectory corresponds to one type of hidden information.

In this embodiment, by detecting the drag gesture trajectory and triggering the hidden information according to the drag gesture trajectory, the triggering method of the hidden information is further enriched. Because the drag gesture trajectory is composed of a set of ordered contact points (second contact coordinates), the information dimension is higher. By changing the target trajectory and triggering different hidden information with different target trajectories, the amount of hidden information set in the video may be greatly increased, and more flexible and diversified hidden information triggering methods may be achieved.

Optionally, after step S206, the method further includes:
Step S208: update, based on a moving trajectory of the component identification, the displaying of an identification attribute of the component identification, where the identification attribute is used to represent a distance and/or a direction between a current position of the component identification and the target position.

For example, the component identification moves synchronously with the drag gesture, the moving trajectory of the component identification is consistent with the drag gesture trajectory corresponding to the drag gesture, and after the drag gesture trajectory corresponding to the drag gesture is obtained, the terminal device dynamically displays the identification attribute of the component identification according to the change of the drag gesture trajectory, thereby indicating the distance and/or the direction of the current position of the component identification from the target position. The identification attribute of the component identification refers to a visual attribute of the component identification, for example, one or more of a color of the component identification, a size of the component identification, a shape of the component identification, a transparency of the component identification. More specifically, for example, with the extension of the drag gesture trajectory, the closer the component identification is to the target position (the end point coordinate), the lower the transparency of the component identification is, the farther the component identification is from the target position (the end point coordinate), the higher the transparency of the component identification is, and therefore, the identification attribute of the component identification is implemented to guide the user to change the position and direction of the drag gesture, to trigger the component identification. For another example, with the extension of the drag gesture trajectory, the higher the overlap degree between the drag gesture trajectory and the target trajectory, the darker the color of the component identification, the lower the overlap degree between the drag gesture trajectory and the target trajectory, the lighter the color of the component identification; therefore, the position and direction of the drag gesture are guided by the user through the identification attribute of the component identification, and finally the purpose of guiding the user to trigger the hidden information is achieved.

For example, the identification attribute includes one of the following: a color of the component identification, a size of the component identification, a shape of the component identification, and a transparency of the component identification.

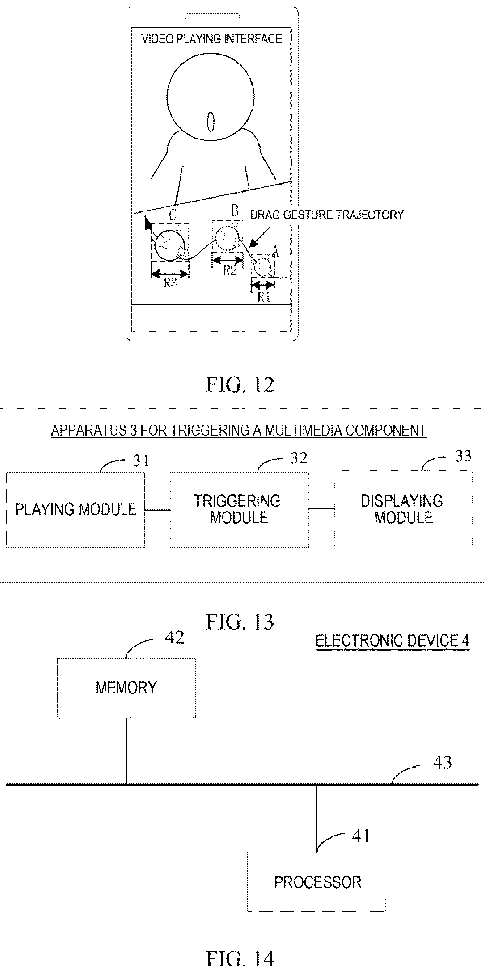

FIG. 12 is a schematic diagram of a change of an identification attribute according to an embodiment of the present disclosure, as shown in FIG. 12, when an end of a drag gesture trajectory is located at position A, a size of the component identification is R1; after the drag gesture trajectory extends from position A to position B, a size of the component identification is R2, where R2 is less than R1, and in this case, the description component identification is farther away from the target position; and when the drag gesture trajectory extends from position A to position C, a size of the component identification is R3, where R3 is greater than R1, and in this case, the description component identification is closer to the target position. The user may adjust the drag gesture by observing the change of the size of the component identification in real time, so as to guide the component identification dragged by the drag gesture to move to the target position, and trigger the hidden information.

In this embodiment, by updating the identification attribute of the component identification in real time according to the moving trajectory of the component identification, and guiding the drag gesture of the user through the identification attribute of the component identification, fast triggering of the hidden information is achieved, the difficulty of triggering the hidden information by the user is reduced, and the interaction efficiency of the hidden information is improved.

Step S209: if the second contact coordinate is not the end point coordinate, return to step s203; if the second contact coordinate is the end point coordinate, display the hidden information in the component container of the video playing interface.

Exemplarily, after the foregoing step is performed, it is determined whether the trigger gesture is currently moving to the target position, and if the trigger gesture is at the target position, the hidden information is triggered; otherwise, the previous step is returned, and the trigger gesture is continuously detected until the trigger gesture meets the predetermined requirement (for example, the trigger gesture trajectory is consistent with the target trajectory). Specifically, if the second contact coordinate of the current contact point is the end point coordinate, it is determined that the trigger gesture has moved to the target position, at this time, the hidden information is triggered, and the hidden information is displayed in the component container of the video play interface; if the second contact coordinate of the current contact point is not the end point coordinate, step S203 is returned to obtain the new second contact coordinate.

Corresponding to the method for triggering a multimedia component provided in the foregoing embodiment, FIG. 13 is a structural block diagram of an apparatus for triggering a multimedia component according to an embodiment of the present disclosure. For ease of illustration, only portions related to embodiments of the present disclosure are shown. Referring to FIG. 13, the apparatus 3 for triggering a multimedia component includes:
a playing module 31, configured to play a target video in a video playing interface;
a trigger module 32, configured to display a component identification in response to a trigger gesture for an identification triggering area in the video playing interface;
a displaying module 33, configured to, in response to a drag gesture for the component identification, move the component identification and display hidden information in the video playing interface after the component identification is moved to a target position.

In an embodiment of the present disclosure, the video playing interface includes a video container and a component container which are arranged in an overlapping manner, where the video container is used for displaying the target video, and the component container is used for displaying the component identification and the hidden information.

In an embodiment of the present disclosure, the component container corresponds to at least one identification triggering area; the triggering module 32 is specifically configured to: obtain a first contact coordinate corresponding to the trigger gesture, and detect the component container based on the first contact coordinate, where the first contact coordinate represents a coordinate of a contact point of the trigger gesture at the video playing interface; and if the first contact coordinate is located in the identification triggering area corresponding to the component container, trigger a component identification event corresponding to the trigger gesture, and display the component identification corresponding to the identification triggering area by responding to the component identification event through the component container.

**In** an embodiment of the present disclosure, the component container includes a first hidden component; when the triggering module 32 displays the component identification corresponding to the identification triggering area by responding to the component identification event through the component container, the triggering module 32 is specifically configured to: set the component container as a first display level and the video container as a second display level, the first display level being higher than or equal to the second display level; and trigger the first hidden component in the component container to respond to the component identification event, and display the component identification in a same layer as the target video.

In an embodiment of the present disclosure, the triggering module 32 is further configured to: if the first contact coordinate is located outside the identification triggering area corresponding to the component container, trigger a video control event corresponding to the trigger gesture, and execute a corresponding video control function by responding to the video control event through the video container.

In an embodiment of the present disclosure, the displaying module 33 is specifically configured to: iteratively perform the following steps until a termination condition is met; obtain a second contact coordinate corresponding to the drag gesture, where the second contact coordinate represents a coordinate of a real-time contact point of the drag gesture at the video playing interface; update a display position of the component identification in the component container according to the second contact coordinate, where the termination condition is that the second contact coordinate is an end point coordinate corresponding to the target position.

In an embodiment of the present disclosure, after obtaining the second contact coordinate corresponding to the drag gesture, the displaying module 33 is further configured to: obtain a drag gesture trajectory corresponding to the drag gesture according to the second contact coordinate; in response to that the drag gesture trajectory is the same as a predetermined target trajectory, determine the second contact coordinate as the end point coordinate corresponding to the target position.

In an embodiment of the present disclosure, before the component identification moves to the target position, the displaying module 33 is further configured to: update, based on a moving trajectory of the component identification, the displaying of an identification attribute of the component identification, where the identification attribute is used to represent a distance and/or a direction between a current position of the component identification and the target position.

In an embodiment of the present disclosure, the identification attribute includes at least one of the following: a color of the component identification, a size of the component identification, a shape of the component identification, and a transparency of the component identification.

In an embodiment of the present disclosure, the trigger gesture is a long-press gesture, and when displaying the component identification in response to the trigger gesture for the identification triggering area in the video playing interface, the display component 33 is specifically configured to: in response to the long-press gesture for the identification triggering area, display a guidance identification that varies over time; and after detecting that the long-press gesture lasts for a first time duration, display the component identification corresponding to the identification triggering area .

The playing module 31, the triggering module 32 and the displaying module 33 are connected. The apparatus 3 for triggering a multimedia component provided in this embodiment may perform the technical solutions of the foregoing method embodiments, and implementation principles and technical effects thereof are similar, and details are not described herein again in this embodiment.

FIG. 14 is a schematic structural diagram of an electronic device according to an embodiment of the present disclosure,
a processor 41, and a memory 42 communicatively connected to the processor 41,
the memory 42 storing computer executable instructions, and
the processor 41 executing the computer-executable instructions stored in the memory 42 to implement the method for triggering the multimedia component in the embodiments shown in FIG. 2 to FIG. 12.

Optionally, the processor 41 and the memory 42 are connected by using a bus 43.

Related descriptions may be understood with reference to related descriptions and effects corresponding to the steps in the embodiments corresponding to FIG. 2 to FIG. 12, and details are not described herein again.

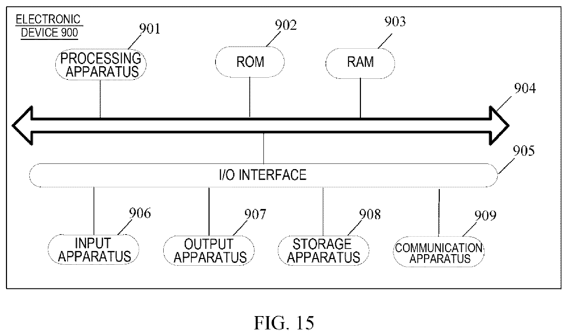

FIG. 15 shows a schematic structural diagram of an electronic device 900 suitable for implementing embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital television (TV), a desktop computer, or the like. The electronic device shown in FIG. 15 is merely an example, and should not impose any limitation on the functions and scope of use of the embodiments of the present disclosure.

As shown in FIG. 15, the electronic device 900 may include a processing apparatus (for example, a central processing unit, a graphics processor, etc.) 901, which may perform various appropriate actions and processing according to a program stored in a read only memory (ROM) 902 or a program loaded into a random access memory (RAM) 903 from a storage apparatus 908. In the RAM 903, various programs and data required by the operation of the electronic device 900 are also stored. The processing apparatus 901, the ROM 902, and the RAM 903 are connected to each other through a bus 904. An input/output (I/O) interface 905 is also connected to the bus 904.

Generally, the following devices may be connected to the I/O interface 905: an input apparatus 906 including, for example, a touch screen, a touch pad, a keyboard, a mouse, a camera, a microphone, an accelerometer, a gyroscope, etc.; an output apparatus 907 including, for example, a liquid crystal display (LCD), a speaker, a vibrator, etc.; a storage apparatus 908 including, for example, a magnetic tape, a hard disk, etc.; and a communication apparatus 909. The communication apparatus 909 may allow the electronic device 900 to communicate wirelessly or wired with other devices to exchange data. While FIG. 15 shows an electronic device 900 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication apparatus 909, or installed from the storage apparatus 908, or from the ROM 902. When the computer program is executed by the processing apparatus 901, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of the computer-readable storage medium may include, but are not limited to, an electrical connection having one or more wires, a portable computer diskette, a hard disk, a random access memory (RAM), a read-only memory (ROM), an erasable programmable read-only memory (EPROM) or a flash memory, an optical fiber, a portable compact disk read-only memory (CD-ROM), an optical storage device, a magnetic storage device, or any suitable combination thereof. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted by any suitable medium, including but not limited to: wires, optical cables, Radio Frequency (RF), and the like, or any suitable combination thereof.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected via the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and / or flowcharts, as well as combinations of blocks in the block diagrams and / or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware logic components. For example, without limitation, the exemplary types of hardware logic components that may be used include: Field-Programmable Gate Array (FPGA), Application Specific Integrated Circuit (ASIC), Application Specific Standard (ASSP), System On Chip (SOC), Complex Programmable Logic Device (CPLD), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to a first aspect, a method for triggering a multimedia component is provided according to one or more embodiments of the present disclosure, including:
playing a target video in a video playing interface; in response to a trigger gesture for an identification triggering area in the video playing interface, displaying a component identification; and in response to a drag gesture for the component identification, moving the component identification and displaying hidden information in the video playing interface after the component identification is moved to a target position.

According to one or more embodiments of the present disclosure, the video playing interface includes a video container and a component container which are arranged in an overlapping manner, where the video container is used for displaying the target video, and the component container is used for displaying the component identification and the hidden information.

According to one or more embodiments of the present disclosure, the component container corresponds to at least one of the identification triggering areas; and the displaying the component identification in response to the trigger gesture for the identification triggering area in the video playing interface includes: obtaining a first contact coordinate corresponding to the trigger gesture, and detecting the component container based on the first contact coordinate, where the first contact coordinate represents a coordinate of a contact point of the trigger gesture at the video playing interface; and if the first contact coordinate is located in the identification triggering area corresponding to the component container, triggering a component identification event corresponding to the trigger gesture, and displaying the component identification corresponding to the identification triggering area by responding to the component identification event through the component container.

According to one or more embodiments of the present disclosure, the component container includes a first hidden component; and the displaying the component identification corresponding to the identification triggering area by responding to the component identification event through the component container includes: setting the component container as a first display level and the video container as a second display level, the first display level being higher than or equal to the second display level; and triggering the first hidden component in the component container to respond to the component identification event, and displaying the component identification in a same layer as the target video.

According to one or more embodiments of the present disclosure, the method further includes: if the first contact coordinate is located outside the identification triggering area corresponding to the component container, triggering a video control event corresponding to the trigger gesture, and executing a corresponding video control function by responding to the video control event through the video container.

According to one or more embodiments of the present disclosure, the in response to a drag gesture for the component identification, moving the component identification and displaying hidden information in the video playing interface after the component identification is moved to a target position includes: iteratively performing the following steps until a termination condition is met: obtaining a second contact coordinate corresponding to the drag gesture, where the second contact coordinate represents a coordinate of a real-time contact point of the drag gesture at the video playing interface; and updating a display position of the component identification in the component container according to the second contact coordinate, where the termination condition is that the second contact coordinate is an end point coordinate corresponding to the target position.

According to one or more embodiments of the present disclosure, after obtaining the second contact coordinate corresponding to the drag gesture, the method further includes: obtaining a drag gesture trajectory corresponding to the drag gesture according to the second contact coordinate; and in response to that the drag gesture trajectory is the same as a predetermined target trajectory, determining the second contact coordinate as the end point coordinate corresponding to the target position.

According to one or more embodiments of the present disclosure, before the component identification moves to the target position, the method further includes: updating, based on a moving trajectory of the component identification, the displaying of an identification attribute of the component identification, where the identification attribute is used to represent a distance and / or a direction between a current position of the component identification and the target position.

According to one or more embodiments of the present disclosure, the identification attribute includes at least one of: a color of the component identification, a size of the component identification, a shape of the component identification, and a transparency of the component identification.

According to one or more embodiments of the present disclosure, the trigger gesture is a long-press gesture, and the displaying a component identification in response to a trigger gesture for an identification triggering area in a video playing interface includes: in response to the long-press gesture for the identification triggering area, displaying a guidance identification that varies over time; and after detecting that the long-press gesture lasts for a first time duration, displaying the component identification corresponding to the identification triggering area.

According to a second aspect, an apparatus for triggering a multimedia component is provided according to one or more embodiments of the present disclosure, including:
a playing module configured to play a target video in a video playing interface;
a triggering module configured to display a component identification in response to a trigger gesture for an identification triggering area in the video playing interface;
a displaying module configured to in response to a drag gesture for the component identification, move the component identification and display hidden information in the video playing interface after the component identification is moved to a target position.

According to one or more embodiments of the present disclosure, the video playing interface includes a video container and a component container which are arranged in an overlapping manner, where the video container is used for displaying the target video, and the component container is used for displaying the component identification and the hidden information.

According to one or more embodiments of the present disclosure, the component container corresponds to at least one of the identification triggering areas; the triggering module is specifically configured to: obtaining a first contact coordinate corresponding to the trigger gesture, and detecting the component container based on the first contact coordinate, where the first contact coordinate represents a coordinate of a contact point of the trigger gesture at the video playing interface; and if the first contact coordinate is located in the identification triggering area corresponding to the component container, triggering a component identification event corresponding to the trigger gesture, and displaying the component identification corresponding to the identification triggering area by responding to the component identification event through the component container.

According to one or more embodiments of the present disclosure, the component container includes a first hidden component; and when displaying the component identification corresponding to the identification triggering area by responding to the component identification event through the component container, the triggering module is specifically configured to: set the component container as a first display level and the video container as a second display level, the first display level being higher than or equal to the second display level; and trigger the first hidden component in the component container to respond to the component identification event, and display the component identification in a same layer as the target video.

According to one or more embodiments of the present disclosure, the triggering module is further configured to: if the first contact coordinate is located outside the identification triggering area corresponding to the component container, trigger a video control event corresponding to the trigger gesture, and execute a corresponding video control function by responding to the video control event through the video container.

According to one or more embodiments of the present disclosure, the displaying module is specifically configured to: iteratively performing the following steps until a termination condition is met: obtain a second contact coordinate corresponding to the drag gesture, where the second contact coordinate represents a coordinate of a real-time contact point of the drag gesture at the video playing interface; and update a display position of the component identification in the component container according to the second contact coordinate, where the termination condition is that the second contact coordinate is an end point coordinate corresponding to the target position.

According to one or more embodiments of the present disclosure, after obtaining the second contact coordinate corresponding to the drag gesture, the displaying module is further configured to: obtain a drag gesture trajectory corresponding to the drag gesture according to the second contact coordinate; and in response to that the drag gesture trajectory is the same as a predetermined target trajectory, determine the second contact coordinate as the end point coordinate corresponding to the target position.

According to one or more embodiments of the present disclosure, before the component identification moves to the target position, the displaying module is further configured to update, based on a moving trajectory of the component identification, the displaying of an identification attribute of the component identification, where the identification attribute is used to represent a distance and / or a direction between a current position of the component identification and the target position.

According to one or more embodiments of the present disclosure, the identification attribute includes at least one of: a color of the component identification, a size of the component identification, a shape of the component identification, and a transparency of the component identification.

According to one or more embodiments of the present disclosure, the trigger gesture is a long-press gesture, and when displaying the component identification in response to the trigger gesture for the identification triggering area in the video playing interface, the displaying module is specifically configured to: in response to the long-press gesture for the identification triggering area, display a guidance identification that varies over time; and in response to the long-press gesture for the identification triggering area, display a guidance identification that varies over time.

According to a third aspect, an electronic device is provided according to one or more embodiments of the present disclosure, including: a processor, and a memory communicatively connected to the processor,
the memory storing computer executable instructions;
the processor executing the computer-executable instructions stored in the memory to implement the method for triggering the multimedia component according to the first aspect and various possible designs of the first aspect.

According to a fourth aspect, a computer-readable storage medium is provided according to one or more embodiments of the present disclosure, where the computer-readable storage medium stores computer-executable instructions, and the computer-executable instructions, when executed by the processor, implement the method for triggering a multimedia component according to the first aspect and the possible designs of the first aspect.

According to a fifth aspect, an embodiment of the present disclosure provides a computer program product, including a computer program, where the computer program, when executed by a processor, implements the method for triggering the multimedia component according to the first aspect and various possible designs of the first aspect.

According to a sixth aspect, an embodiment of the present disclosure provides a computer program, where the computer program, when executed by a processor, implements the method for triggering a multimedia component according to the first aspect and various possible designs of the first aspect.

The above description is merely an illustration of the preferred embodiments of the present disclosure and the principles of the application. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed, but not limited to, in the present disclosure.

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable sub-combination.

Although the present subject matter has been described in language specific to structural features and / or methodological acts, it is to be understood that the subject matter defined in the appended claims is not necessarily limited to the specific features or acts described above. Rather, the specific features and acts described above are merely exemplary forms of implementing the claims.

## Claims

1. A method for triggering a multimedia component, comprising:
playing a target video in a video playing interface;
in response to a trigger gesture for an identification triggering area in the video playing interface, displaying a component identification; and
in response to a drag gesture for the component identification, moving the component identification and displaying hidden information in the video playing interface after the component identification is moved to a target position.

2. The method of claim 1, wherein the video playing interface comprises a video container and a component container which are arranged in an overlapping manner, wherein the video container is used for displaying the target video, and the component container is used for displaying the component identification and the hidden information.

3. The method of claim 2, wherein the component container corresponds to at least one of the identification triggering areas; and the displaying the component identification in response to the trigger gesture for the identification triggering area in the video playing interface comprises:
obtaining a first contact coordinate corresponding to the trigger gesture, and detecting the component container based on the first contact coordinate, wherein the first contact coordinate represents a coordinate of a contact point of the trigger gesture at the video playing interface; and
if the first contact coordinate is located in the identification triggering area corresponding to the component container, triggering a component identification event corresponding to the trigger gesture, and displaying the component identification corresponding to the identification triggering area by responding to the component identification event through the component container.

4. The method according to claim 3, wherein the component container comprises a first hidden component; and the displaying the component identification corresponding to the identification triggering area by responding to the component identification event through the component container comprises:
setting the component container as a first display level and the video container as a second display level, the first display level being higher than or equal to the second display level; and
triggering the first hidden component in the component container to respond to the component identification event, and displaying the component identification in a same layer as the target video.

5. The method of claim 3 or claim 4, further comprising:
if the first contact coordinate is located outside the identification triggering area corresponding to the component container, triggering a video control event corresponding to the trigger gesture, and executing a corresponding video control function by responding to the video control event through the video container.

6. The method of claim 2, wherein the in response to a drag gesture for the component identification, moving the component identification and displaying hidden information in the video playing interface after the component identification is moved to a target position comprises:
iteratively performing the following steps until a termination condition is met:
obtaining a second contact coordinate corresponding to the drag gesture, wherein the second contact coordinate represents a coordinate of a real-time contact point of the drag gesture at the video playing interface; and
updating a display position of the component identification in the component container according to the second contact coordinate,
wherein the termination condition is that the second contact coordinate is an end point coordinate corresponding to the target position.

7. The method according to claim 6, wherein after obtaining the second contact coordinate corresponding to the drag gesture, the method further comprises:
obtaining a drag gesture trajectory corresponding to the drag gesture according to the second contact coordinate; and
in response to that the drag gesture trajectory is the same as a predetermined target trajectory, determining the second contact coordinate as the end point coordinate corresponding to the target position.

8. The method of any of claims 1 to 7, wherein before the component identification moves to the target position, the method further comprises:
updating, based on a moving trajectory of the component identification, the displaying of an identification attribute of the component identification, wherein the identification attribute is used to represent a distance and / or a direction between a current position of the component identification and the target position.

9. The method of claim 8, wherein the identification attribute comprises one of:
a color of the component identification, a size of the component identification, a shape of the component identification, and a transparency of the component identification.

10. The method according to claim 1, 8 or 9, wherein the trigger gesture is a long-press gesture, and the displaying the component identification comprises:
in response to the long-press gesture for the identification triggering area, displaying a guidance identification that varies over time; and
after detecting that the long-press gesture lasts for a first time duration, displaying the component identification corresponding to the identification triggering area.

11. An apparatus for triggering a multimedia component, comprising:
a playing module configured to play a target video in a video playing interface;
a triggering module configured to display a component identification in response to a trigger gesture for an identification triggering area in the video playing interface; and
a displaying module configured to in response to a drag gesture for the component identification, move the component identification and display hidden information in the video playing interface after the component identification is moved to a target position.

12. An electronic device, comprising: a processor, and a memory communicatively connected to the processor,
the memory storing computer executable instructions, and
the processor executing the computer-executable instructions stored in the memory to implement the method for triggering the multimedia component of any of claims 1 to 10.

13. A computer-readable storage medium storing computer-executable instructions, wherein the computer-executable instructions, when executed by the processor, implement the method for triggering the multimedia component of any of claims 1 to 10.

14. A computer program product, comprising a computer program, wherein the computer program, when executed by a processor, implements the method for triggering the multimedia component of any of claims 1 to 10.

15. A computer program for implementing the method for triggering the multimedia component of any of claims 1 to 10.
